# EUROPÄISCHE PATENTSCHRIFT

(11) **EP 1 232 656 B1**
(45) Veröffentlichungstag und Bekanntmachung des Hinweises auf die Patenterteilung: **31.08.2011**
(21) Anmeldenummer: 00990610.8
(22) Anmeldetag: 22.11.2000
(51) Int. Cl.: H04Q 3/00

(54) **VERFAHREN ZUR ANSTEUERUNG VON SERVERN**
METHOD FOR CONTROLLING SERVERS
PROCEDE PERMETTANT DE COMMANDER DES SERVEURS

(30) Priorität: 22.11.1999 DE 19956081
(43) Veröffentlichungstag der Anmeldung: 21.08.2002
(73) Patentinhaber: Nokia Siemens Networks GmbH & Co. KG, 81541 München (DE)
(72) Erfinder: GRADISCHNIG, Klaus, David, Reston, VA 20194-1977 (US); UNGER, Stefan, 82008 Unterhaching (DE)
(86) Internationale Anmeldenummer: PCT/EP2000/011634
(87) Internationale Veröffentlichungsnummer: WO 2001/039459

(56) Entgegenhaltungen:
- EP-A- 1 133 196
- WO-A-97/36431

## Beschreibung

1. Welches technische Problem soll durch Ihre Erfindung gelöst werden?
2. Wie wurde dieses Problem bisher gelöst?
3. In welcher Weise löst Ihre Erfindung das angegebene technische Problem (geben Sie Vorteile an)?
4. Ausführungsbeispiel(e) der Erfindung.

Zu 1. Eine wesentliche Eigenschaft sog. Intelligenter Netze (siehe ITU-T Empfehlungen der Q.1200 Serie) ist eine verteilte Architektur (siehe z.B. Q.1214), in der eine sog. Service Switching Function (SSF) durch eine sog. Service Control Function (SCF) "kontrolliert" wird, wobei diese beiden Funktionen normalerweise (aber nicht notwendigerweise) in unterschiedlichen physikalischen Knoten (dem sog. Service Control Point, SCP, bzw. dem Service Switching Point, SSP) realisiert sind. Dabei wird das sog. INAP (Intelligent Network Application Part) Protokoll, welches auf TC (Transaction Capabilities, siehe Q.77x), SCCP (Q.71x) MTP (Q.70x) aufsetzt, zur Kommunikation verwendet.

Es sind nun Anwendungsfälle denkbar, in denen ein SCP die Bearbeitung einer Transaktion beginnt, die Bearbeitung dann aber auf einem anderen SCP fortgesetzt werden soll. Wie diese Fortsetzung, in Fällen, in denen dies protokollmäßig gelöst werden kann, durchgeführt werden kann, wird in der vorliegenden Erfindung beschrieben.

Zu 2. In den Standards ist für diese Fortsetzung einer Transaktionsbearbeitung keine Lösung vorgesehen. In Frage kommt ein sogenannter Transfer, bei dem die die Transaktion eröffnende Nachricht nach einer ersten Behandlung an den nächsten SCP weitergegeben wird. Dabei wird der logische Absender dieser Nachricht nicht verändert, sodaß es für den nächsten SCP so aussieht, als ob die Nachricht direkt von einem SSP gekommen wäre. Der SCP kann dann dem SSP direkt antworten, sodaß etwaige weitere Nachrichten für diese Transaktion direkt zwischen SSP und neuem SCP ausgetauscht werden können. Ist es jedoch erforderlich, daß der erste SCP mit dem SSP weitere Nachrichten austauschen muß, so ist dieser Transfer nicht mehr möglich. Ein Situation, in der so ein weiterer Nachrichtenaustausch notwendig wird, ist es, daß in der ersten Nachricht noch nicht genügend Adressinformationen (z.B. gewählte Ziffern) vorhanden sind, um den 2., für die weitere Bearbeitung zuständigen SCP zu bestimmen.

Da der SSP nämlich mit der ersten Rückwärtsnachricht, die er für die Transaktion erhält, die Adresse des Nachrichtenabsenders einschließlich der vom Absender verwendeten Identifikation der Transaktion speichert und diese Informationen für alle zukünftigen, für diese Transaktion auszusendenden Nachrichten verwendet, wird der SSP alle weiteren Nachrichten an den ersten SCP senden, auch wenn dieser die Bearbeitung zwischenzeitlich dem zweiten SCP übergeben hat.

In diesem Falle ist also der erste SCP weiterhin an die Kommunikation zwischen SSP und zweitem SCP eingebunden.

Der erste SCP muß nämlich anstelle eines Transfers eine eigene Transaktion mit dem zweiten SCP eröffnen und als Kommunikationsweiche im Dialog zwischen SSP und 2.SCP verbleiben. Dafür muß der erste SCP die zwischen zweitem SCP und SSP auszutauschenden Nachrichten dahingehend bearbeiten, daß er die Adressen und Transaktionsidentifikationen vom zweiten und ersten SCP bei Nachrichten die vom 2. SCP zum 1. SCP gesendet werden mit denen für die Transaktion zwischen 1. SCP und SSP gültigen ersetzt und die geänderten Nachrichten an den SSP weiterleitet.

Nachrichten vom SSP werden im 1. SCP umgekehrt so bearbeitet, daß die Adressen und Transaktionsidentifikationen von SSP und erstem SCP mit denen für die Transaktion zwischen 1. und 2. SCP gültigen ersetzt und die geänderten Nachrichten an den 2. SCP weitergeleitet werden. Man spricht in diesem Falle von einem Applikationsrelais, der vom 1. SCP durchgeführt wird.

Wie sofort zu sehen ist, hat diese Lösung den Nachteil, daß der 1. SCP, obwohl er außer der Weiterleitung für die Transakation(en) keine funktionale Aufgaben zu erfüllen hat, in die Kommunikation weiterhin eingebunden bleibt und die Nachrichten bis auf TC Protokollebene analysieren und ändern muß. Dadurch werden sowohl Zeit als auch Prozessor-und Speicherresourcen verschwendet.

Zu 3. Erfindungsgemäß wird nun dieser oben beschrieben Nachteil der Notwendigkeit des Applikationsrelais dadurch vermieden, daß der 1. SCP nach erfolgter Kommunikation mit dem SSP und unter der Voraussetzung, daß der SSP nun alle notwendigen Informationen gesammelt und verfügbar hat, die Transaktion mit dem SSP derart beendet, daß der SSP instruiert wird, den in der Bearbeitung befindlichen Ruf neu zu analysieren. Diese neue Ziffernanalyse führt zu einem erneuten Transaktionsaufbau zum 1. SCP. Da nun aber alle erforderlichen Informationen vorhanden sind, kann der 1. SCP auf weitere Anfragen zum SSP verzichten und die Nachricht nach etwaiger Behandlung mittels Transfer zum 2. SCP weiterleiten. Zwar benötigt dieser zweite Transaktionsaufbau auch Zeit, diese wird, aber mehr als wettgemacht, wenn genügend zusätzliche Nachrichten zwischen 2. SCP und SSP ausgetauscht werden müssen. In jedem Falle werden im 1. SCP jedoch weniger Speicherresourcen zur Verwaltung von Transaktionen und Applikationsrelais benötigt. Die Erfindung verwendet somit standardkonforme Mittel, um ein vom Standard nicht adressiertes Problem zu lösen.

Als vorteilhafte Ausprägung kommt daher in einem SCP das erfindungsgemäße Verfahren nur dann zu Anwendung, wenn abzusehen ist, daß die Zeit- bzw. Prozessorleistungsersparnis durch den vermiedenen Applikationsrelais die Aufwände für den erneuten Transaktionsaufbau wettmacht.

In einer zweiten Ausprägung wird bei Beendigung der ersten Transaktion durch den ersten SCP dem SSP zusätzliche Information mitgegeben, die dieser dann im zweiten Transaktionsaufbau zum 1. SCP spiegelt. Der 1. SCP kann diese Informationen verwenden, um die Bearbeitung der 2. Transaktion zu beschleunigen.

In einer dritten Ausprägung wird bei Beendigung der ersten Transaktion durch den ersten SCP dem SSP zusätzliche Information (z.B. eine modifizierte Rufnummer) mitgegeben, die zur Folge hat, daß der SSP die 2. Transaktion direkt mit dem 2. SCP aufbaut. Dafür ist jedoch notwendig, daß der SSP entsprechende Triggertabellen hat, was u.U. nicht immer gewährleistet ist.

In einer vierten Ausprägung kommt in einem SCP das erfindungsgemäße Verfahren nur dann zu Anwendung, wenn die aktuelle Last des SCP es angeraten erscheinen läßt, den SCP möglichst wenig zu belasten und eine zweite, mittels Transfer zu erledigende Transaktion weniger Aufwand bzw. Resourcen benötigt, als eine Fortsetzung der aktuellen Transaktion mittels Applikationsrelais..

Zu 4. Als beispielhafte Ausführung der Erfindung betrachten wir den Fall für Dienstrufnummernportabilität. Dabei wird für IN Rufe, bevor die eigentliche Dienstlogik in einem SCP getriggert wird, ein Dienstrufnummernportabilitätsserver (DRN-Server) abgefragt ob die entsprechende Dienstrufnummer (DRN) portiert wurde oder nicht. Im Portierungsfall ist der Ruf zum neuen SCP eines fremden Netzbetreibers weiterzuleiten. Ist die DRN nicht portiert, kann der bisherige SCP des Netzbetreibers den IN Ruf bearbeiten. Gemäß der Beschreibung unter 3. ist der erste SCP hier der DRN-Portabilitätsserver und der zweite SCP der bisherige SCP des Netzbetreibers (Fall: DRN nicht portiert).

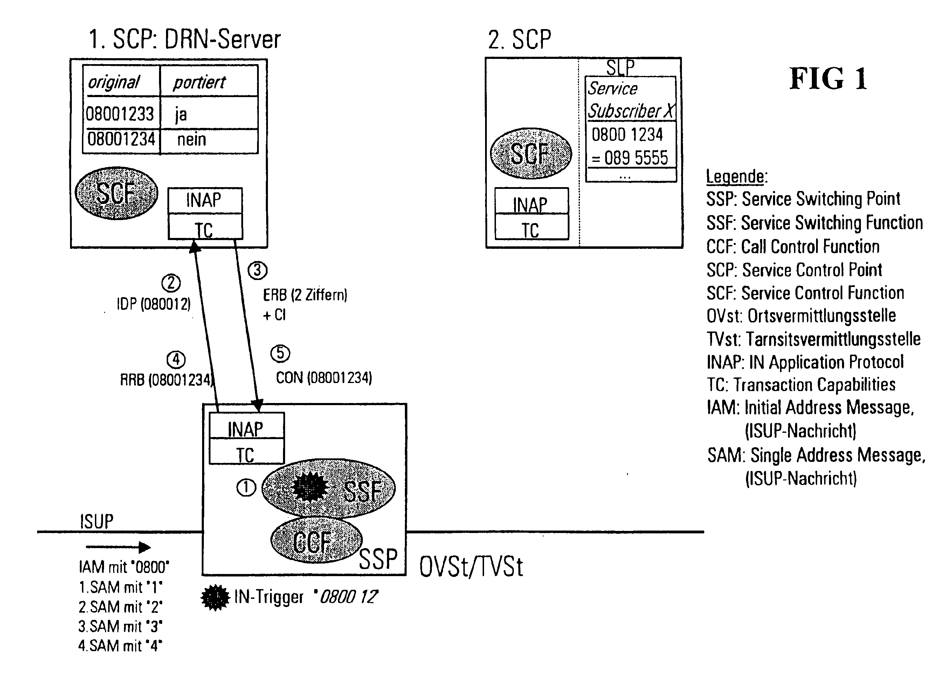

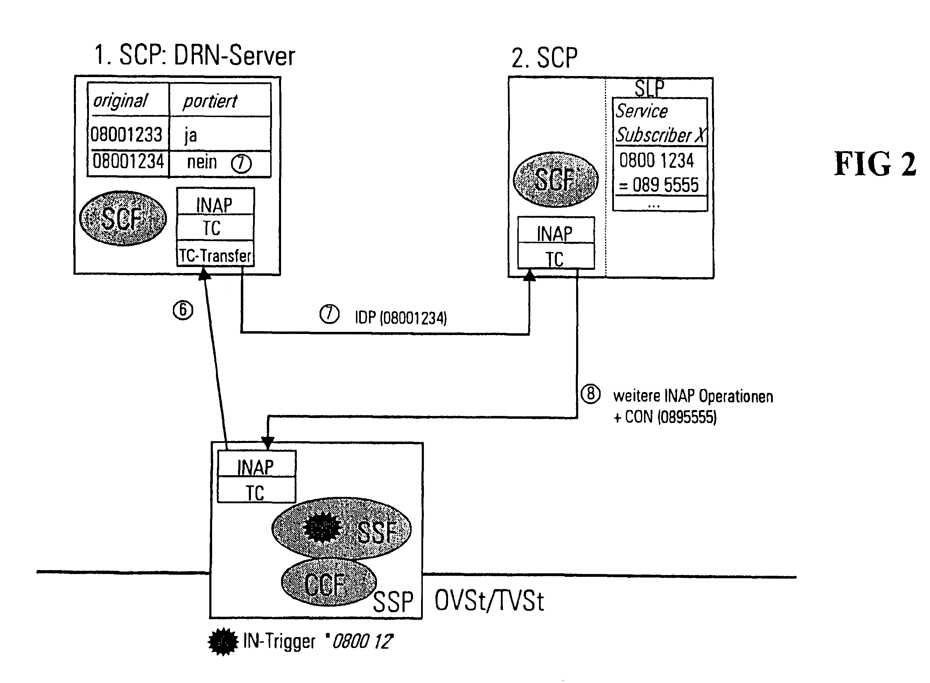

Nachfolgende Szenarien (siehe FIG 1 und 2 sowie diesbezüglich nachfolgende Beschreibung) sollen den Ablauf verdeutlichen. Dabei ist das erfindungsgemäße Verhalten für die erste und zweite Ausprägung beschrieben.
1. IN-Trigger auf die gewählte DNR, Triggerkriterium = 080012
2.Bei Trigger wird generell eine INAP-Nachricht an den DRN-Server (1.SCP) gesendet (INAP: InitialDP/IDP*)
3.Dienstlogik kann aufgrund mitgelieferter Called Party Number = 080012 nicht erkennen ob DNR portiert ist, sendet Anforderung an SSP zwei weitere Ziffern nachzuschicken (INAP: RequestReportBCSM/RRB + CollectInfo/CI*)
4.SSP sendet die nachgeforderten Ziffern an den DRN-Server (INAP: EventReportBCSM/ERB*)
5.DRN-Server erkennt, daß DRN = 08001234 nicht portiert ist und übergibt dem SSP die vollständige DRN zur weiteren Behandlung (INAP: Connect/CON*). Mit dieser Übergabe wird der INAP-Dialog zwischen DRN_Server und SSP beendet.
6.Der SSP führt eine Ziffernanalyse der via INAP empfangenen DNR durch und erkennt erneut den unter 1. beschriebenen IN-Trigger. Aus SSP Sicht ist dies ein völlig neuer Trigger, d.h. es gibt keine Korrelation mehr zu dem vorigen Trigger auf dieselbe DRN. Gemäß eingerichtetem Triggerdaten wird ein erneuter INAP-Dialog mit dem DNR-Server eröffnet.
7.Die Dienstlogik kann aufgrund der jetzt vollständigen Called Party Number = 08001234 erkennen, daß die DNR nicht portiert ist und führt einen Transfer (TC-Transfer) der INAP-Nachricht an den 2. SCP durch, der die Dienstlogik für die DNR enthält.
8.Der 2.SCP setzt den INAP-Dialog mit dem SSP gemäß der Dienstlogik fort. Der 1.SCP ist in die Kommunikation nicht mehr involviert.
*Anmerkung: Zu INAP Operationen siehe z.B. Q.1218

## Patentansprüche

1. Verfahren zur Steuerung von Diensten in einem Kommunikationsnetz mithilfe von Servern (1.SCP, 2.SCP), demgemäß
- von einem Netzknoten des Kommunikationsnetzes zur Unterstützung der Bearbeitung eines Dienstes eine erste Kommunikation mit einem erstem Server (1.SCP) begonnen wird, **dadurch gekennzeichnet, daß**
- die erste Kommunikation durch den ersten Server (1.SCP) beendet wird, sobald der erste Server und der Netzknoten mithilfe der ersten Kommunikation alle Informationen gesammelt haben, die für eine Auswahl des zur Unterstützung der Bearbeitung des Dienstes notwendigen zweiten Server (2.SCP) benötigt werden, und welche durch eine einzige Nachricht an einen zweiten Server (2.SCP) gesendet werden können,
- der Netzknoten instruiert wird, zur Unterstützung der Bearbeitung des Dienstes eine zweite Kommunikation zu dem ersten Server (1.SCP) zu beginnen, wobei in die erste Nachricht dieser zweiten Kommunikation alle Informationen gepackt werden, die für eine Auswahl des zur Unterstützung der Bearbeitung des Dienstes notwendigen zweiten Server (2.SCP) benötigt werden,
- die genannte erste Nachricht von dem ersten Server (1.SCP) bearbeitet wird und Informationen zur Übernahme dieser zweiten Kommunikation vom ersten Server (1.SCP) den zweiten Server (2.SCP) weitergesendet werden,
- die zweite Kommunikation von dem zweiten Server (2.SCP) fortgesetzt wird.

2. Verfahren nach Anspruch 1,
**dadurch gekennzeichnet, daß**
es nur bei solchen Verbindungen durchgeführt wird, bei denen die Zeit- bzw. Prozessorleistungsersparnis durch den vermiedenen Applikationsrelais die Aufwände für den zweiten Kommunikationsaufbau wettmacht.

3. Verfahren nach Anspruch 1 oder 2,
**dadurch gekennzeichnet, daß**
bei Beendigung der ersten Kommunikation durch den ersten Server dem Netzknoten zusätzliche Information mitgegeben werden, die von diesem dann in der zweiten Kommunikation zu dem ersten Server gespiegelt werden.

4. Verfahren nach einem der Ansprüche 1 bis 3,
**dadurch gekennzeichnet, daß**
bei Beendigung der ersten Kommunikation durch den ersten Server dem Netzknoten zusätzliche Information mitgegeben werden, die bewirken, daß die genannte zweite Kommunikation nicht mit dem ersten Server sondern direkt mit dem zweiten Server aufgebaut wird.

5. Verfahren nach einem der Ansprüche 1 bis 4,
**dadurch gekennzeichnet, daß**
die Kommunikation zwischen Netzknoten und Servern mit Hilfe des sog. INAP Protokolls durchgeführt wird.

## Claims

1. Method for controlling services in a communications network by means of servers (1. SCP, 2. SCP), according to which
- a first communication with a first server (1. SCP) is started by a network node in the communications network in order to assist the processing of a service,
**characterized in that**
- the first communication is ended by the first server (1. SCP) as soon as the first server and the network node have used the first communication to gather all the information which information is required for selection of the second server (2. SCP), which second server (2. SCP)is required in order to assist the processing of the service, and which information can be transmitted by means of a single message to a second server (2. SCP),
- the network node is instructed to start a second communication with the first server (1. SCP) in order to assist the processing of the service, wherein all the information which information is required for selection of the second server (2. SCP), which second server (2. SCP)is required in order to assist the processing of the service, is packed into the first message in this second communication,
- said first message is processed by the first server (1. SCP), and information relating to a transfer of this second communication is forwarded from the first server (1. SCP) to the second server (2. SCP), and
- the second communication is continued by the second server (2. SCP).

2. Method according to Claim 1,
**characterized in that**
said method is carried out only for those connections for which the time and processor power saving resulting from the application relays that are avoided compensates the complexity for setting up the second communication.

3. Method according to Claim 1 or 2,
**characterized in that**
when the first communication is ended by the first server, additional information is passed to the network node and is then mirrored by the network node in the second communication to the first server.

4. Method according to one of Claims 1 to 3,
**characterized in that**
when the first communication is ended by the first server, additional information is passed to the network node and causes said second communication being set up not to the first server, but being set up directly to the second server.

5. Method according to one of Claims 1 to 4,
**characterized in that**
the communication between network nodes and servers is carried out using the so-called INAP protocol.

## Revendications

1. Procédé pour commander des services dans un réseau de communication à l'aide de serveurs (1. SCP, 2. SCP), dans lequel :
- une première communication avec un premier serveur (1. SCP) est commencée par un noeud de réseau du réseau de communication pour supporter le traitement d'un service,
**caractérisé en ce que** :
- la première communication est terminée par le premier serveur (1. SCP) dès que le premier serveur et le noeud de réseau ont collecté, à l'aide de la première communication, toutes les informations qui sont requises pour une sélection du deuxième serveur (2. SCP) requis pour supporter le traitement du service et qui peuvent être envoyées à un deuxième serveur (2. SCP) par un unique message ;
- le noeud de réseau reçoit l'instruction de commencer une deuxième communication avec le premier serveur (1. SCP) pour supporter le traitement du service, toutes les informations requises pour une sélection du deuxième serveur (2. SCP) requis pour supporter le traitement du service étant mises dans le premier message de cette deuxième communication ;
- ledit premier message est traité par le premier serveur (1. SCP) et des informations pour la prise en charge de cette deuxième communication sont retransmises du premier serveur (1. SCP) au deuxième serveur (2. SCP) ;
- la poursuite de la deuxième communication est effectuée par le deuxième serveur (2. SCP).

2. Procédé selon la revendication 1, **caractérisé en ce qu'**il est uniquement exécuté dans le cas de liaisons dans lesquelles le gain de temps et de puissance du processeur du fait du relais d'application évité compense les dépenses pour le deuxième établissement de communication.

3. Procédé selon la revendication 1 ou 2, **caractérisé en ce que**, lorsqu'il est mis fin à la première communication par le premier serveur, des informations supplémentaires sont communiquées au noeud de réseau, lesquelles sont alors réfléchies par celui-ci dans la deuxième communication vers le premier serveur.

4. Procédé selon l'une des revendications 1 à 3, **caractérisé en ce que**, lorsqu'il est mis fin à la première communication par le premier serveur, des informations supplémentaires sont communiquées au noeud de réseau, lesquelles provoquent l'établissement de ladite deuxième communication non pas avec le premier serveur, mais directement avec le deuxième serveur.

5. Procédé selon l'une des revendications 1 à 4, dans lequel la communication entre noeuds de réseau et serveurs est effectuée à l'aide du protocole dit INAP.
